# EUROPÄISCHE PATENTSCHRIFT

(11) **EP 2 740 273 B1**
(45) Veröffentlichungstag und Bekanntmachung des Hinweises auf die Patenterteilung: **01.03.2017**
(21) Anmeldenummer: 12742807.6
(22) Anmeldetag: 27.07.2012
(51) Int. Cl.: H04N 5/232, G02B 27/22, H04N 13/02

(54) **VERFAHREN ZUM KORRIGIEREN DER ZOOM-EINSTELLUNG UND/ODER DES VERTIKALEN VERSATZES VON TEILBILDERN EINES STEREOFILMS SOWIE STEUERUNG ODER REGELUNG EINES KAMERARIGS MIT ZWEI KAMERAS**
METHOD FOR CORRECTING THE ZOOM SETTING AND/OR THE VERTICAL OFFSET OF FRAMES OF A STEREO FILM AND CONTROL OR REGULATING SYSTEM OF A CAMERA RIG HAVING TWO CAMERAS
PROCÉDÉ DE CORRECTION DU RÉGLAGE DE ZOOM ET/OU DU DÉCALAGE VERTICAL D'IMAGES PARTIELLES D'UN FILM STÉRÉOSCOPIQUE AINSI QUE COMMANDE OU RÉGLAGE D'UN SUPPORT DE CAMÉRAS ÉQUIPÉ DE DEUX CAMÉRAS

(30) Priorität: 03.08.2011 DE 102011109301
(43) Veröffentlichungstag der Anmeldung: 11.06.2014
(73) Patentinhaber: Truality, LLC, Burbank, CA 91502 (US)
(72) Erfinder: WIELAND, Christian, 86250 Augsburg (DE); LENZ, Matthias, 86316 Friedberg (DE)
(74) Vertreter: Winter, Brandl, Fürniss, Hübner, Röss, Kaiser, Polte - Partnerschaft mbB
(86) Internationale Anmeldenummer: PCT/EP2012/003212
(87) Internationale Veröffentlichungsnummer: WO 2013/017246

(56) Entgegenhaltungen:
- EP-A1- 2 026 589
- US-A1- 2007 139 612
- US-A1- 2007 146 478
- US-A1- 2008 018 731
- US-A1- 2009 128 621
- US-A1- 2011 169 918

## Beschreibung

### Gebiet der Erfindung

Die Erfindung betrifft ein Verfahren zum Korrigieren der Zoom-Einstellung und/oder des vertikalen Versatzes in einem aus zwei Teilbildern zusammengesetzten Bilds eines Stereofilms, wobei das eine Teilbild von einer ersten Kamera eines Kamerarigs zur Verfügung gestellt wird und das zweite Teilbild von einer zweiten Kamera des Kamerarigs zur Verfügung gestellt wird, wobei ein vertikaler Versatz über eine Veränderung der Pitch-Einstellung verändert wird. Mit anderen Worten geht es um die Korrektur des Zoom-Unterschiedes und/oder des vertikalen Versatzes zwischen Einzelbildern eines Stereobildpaares.

Die Zoom-Einstellung hat Einfluss auf die Größe des Bildes, also wie viel von dem Bild derart dargestellt ist, dass der Inhalt über eine bestimmte Anzahl von ausfüllbaren Pixeln verteilt ist. Unter einem vertikalen Versatz wird der Versatz zwischen zwei korrespondierenden Bildpunkten von einem ersten Teilbild zu einem zweiten Teilbild verstanden, wobei die beiden Teilbilder gemeinsam überlagert ein gemeinsames Bild formen, welches auf eine Leinwand projizierbar ist oder auf einem Bildwiedergabegerät, wie etwa einem Fernseher darstellbar ist. Ein solches Bild ruft beim Betrachter einen dreidimensionalen Effekt hervor und ist Teil eines 3D-Films, der auch als Stereofilm bezeichnet wird.

Der dreidimensionale Effekt wird dadurch erreicht, dass jedes Auge des Betrachters eines der beiden Teilbilder fixiert und aufgrund des horizontalen Versatzes eines Bildpunktes relativ zu dem korrespondierenden Bildpunkt in dem anderen der beiden Teilbilder, im Gehirn des Betrachters ein räumlicher Effekt resultiert. Dieser 3D-Effekt wird auch als Tiefeneffekt bezeichnet.

Die Pitch-Einstellung beeinflusst den Sehstrahl einer Kamera beim Schwenken in einer senkrecht stehenden Ebene.

Bekannter Stand der Technik wird auch in der US 2009/0128621 A1 offenbart. Dort wird ein Verfahren zum automatisierten, stereoskopischen Anpassen von Bildern offenbart. Dabei wird eine Gruppe Kameras für die Aufnahme von Video-Streams eingesetzt. Ein Computer ist mit dieser Gruppe Kameras in Verbindung, um die geometrische Ausrichtung jedes der Video Streams unter zu Hilfenahme verschiedener Indikatoren zu bestimmen und daraufhin die einzelnen Video Streams auf Grndlage der geometrische Ausrichtung anzupassen. Die US 2009/0128621 A1 wird als nächstliegender Stand der Technik angesehen.

Weiterer Stand der Technik ist aus der US 2007/0146478 A1, der US 2011/0169918 A1 und der US 2007/0139612 A1 bekannt.

Aus dem Stand der Technik ist bekannt, die zwei Kameras eines Kamerarigs, welches für das Aufbringen eines Stereofilms genutzt wird, vor dem Betrieb beim Aufnehmen des Stereofilms zu kalibrieren. Dafür wird vor dem Aufnehmen des Stereofilms eine Vielzahl von Zoom-Stufen durchfahren und die jeweilige Abweichung von einem Bildprozessor erfasst. Die Abweichungen werden Korrekturwerten gegenüber gestellt, welche in einer sog. Basistabelle abgespeichert werden.

Gemäß dieser Basistabelle, werden nun Korrekturwerte für jede Zoom-Einstellung, d.h. für jede Brennweite zugrunde gelegt.

Während des Betriebes sind jedoch zahlreiche externe Faktoren zu kompensieren, wie etwa Temperaturerhöhung durch Sonneneinstrahlung oder aufgrund der im Kamerarig vorhandenen und betätigten Motoren, Trägheit, Spiel etc. Es ist die Aufgabe der vorliegenden Erfindung hier eine Abhilfe und Verbesserung zu bieten, sodass auch während des Filmens, also Aufnehmen eines Stereofilms, die beiden Teilbilder, welche ein gemeinsames Bild formen, immer optimal bzgl. ihres Zoom-Versatzes und ihres vertikalen Versatzes "fluchten", d.h. zusammenpassen. Ein solcher "Zoom-Mismatch" oder ein "Vertical Displacement" soll während des Betriebes dauerhaft und vorzugsweise sofort kompensiert werden.

Diese Aufgabe wird erfindungsgemäß durch die Merkmale des Anspruchs 1 gelöst, insbesondere dadurch gelöst, dass während des Betriebes beim Aufnehmen des Stereofilms ein Unterschied zwischen den vorliegenden Zoom-Ergebnissen in dem ersten Teilbild relativ zum zweiten Teilbild erfasst wird und/oder ein vertikaler Versatz, der im ersten Teilbild vorhandenen Bildpunkte zu diesen korrespondierenden Bildpunkten im zweiten Teilbild erfasst wird und basierend auf dieser Erkenntnis Korrekturwerte errechnet werden, mit denen der Zoom-Unterschied und/oder der vertikale Versatz, bei entsprechender Anwendung auf die Zoom- und/oder Pitch-Einstellung, vermindert wird und jedem Korrekturwert ein Zeitwert und ein Konfidenzwert zugewiesen wird. Dieser Zeitwert kann auch als Zeitstempel bezeichnet werden und kennzeichnet den Zeitpunkt, an dem der Korrekturwert generiert wurde. Auf diese Weise ist immer nachvollziehbar, wann während des Stereofilmens ein Korrekturwert erzeugt wurde.

Vorteilhafte Ausführungsformen sind in den Unteransprüchen beansprucht und werden nachfolgend näher erläutert.

So ist es von Vorteil, wenn die Ansteuerung des Kamerarigs entsprechend des Korrekturwerts, den Zoom-Unterschied und/oder den vertikalen Versatz zwischen den zwei Teilbildern beseitigt. Auch eine rein digitale Bildkorrektur ist möglich.

Jeder Korrekturwert weist einen entsprechend zugehörigen Konfidenzwert auf. Ein solcher Konfidenzwert kennzeichnet die Güte der durch einen Bild-prozessor durchgeführten Bildanalyse, auf deren Grundlage der Korrekturwert generiert wurde. Auf diese Weise ist mit jedem Korrekturwert auch ein Verlässlichkeitsmaß verknüpft. Abschnitte zwischen vorgenommenen Korrekturen werden per Interpolation gefüllt, sofern sie einen vordefinierten Maximalabstand auf der Abszisse nicht überschreiten, damit auch für diese unbesuchten Abschnitte Korrekturwerte zur Verfügung stehen. Durch die Interpolierung wird selbst für die Zoom-Einstellungen und/oder Pitch-Einstellungen, welche nicht explizit angefahren wurden, bei entsprechend naheliegenden neuen Korrekturwerten eine Ergänzung durch zusätzliche neue Korrekturwerte erreicht. Die Interpolation wird vorzugsweise in Abhängigkeit der Zeit- und/oder Konfidenzwerte der beteiligten Korrekturwerte durchgeführt.

Die Korrekturwerte werden stets am Motor realisiert bzw. umgesetzt und in einer Korrekturtabelle vermerkt. Es sind dabei zwei Varianten praktikabel, die sich darin unterscheiden, ob die aus den Korrekturwerten und deren Interpolation gebildete Korrekturtabelle sofort zur Berichtigung der Zoom-Einstellung und/oder der Pitch-Einstellung einer Kamera des Kamerarigs eingesetzt wird, so dass sofort, also noch während des Filmens eine positive Veränderung erzielt wird, oder zeitversetzt eingesetzt wird, also erst nach expliziter Freigabe durch einen Bediener. Dadurch kann, im besagten zweiten Fall, eine manuelle Kontrollschleife etabliert werden, die Fehlbedienungen oder Fehlberechnungen ausschließt. Zur Erläuterung sei angemerkt, dass die Ansteuerung der Motoren eine Regelung realisiert. Jede Korrektur wird dadurch gleich am Motor umgesetzt. Die beiden Varianten unterscheiden sich also darin, ob die aus den Einzelkorrekturen gebildete Tabelle, die auch mithilfe von Interpolation gewonnene Abschnitte enthält, sofort verwendet wird, was dann den Vorteil birgt, dass bei erneutem Besuch einer Brennweite nicht von neuem korrigiert werden muss, weil die Werte der Korrekturtabelle, wie sie in einem vorhergehendem Durchlauf ermittelt wurden, gleich angewendet werden.

Es hat sich herausgestellt, dass es von Vorteil ist, wenn die Zoom-Korrekturwerte in Abhängigkeit der Zoom-Richtung, die bei deren Ermittlung zugrunde liegt, in einer ersten oder zweiten Zoom-Korrektur-Wertetabelle abgespeichert werden. Das unterschiedliche Kameraverhalten, in Abhängigkeit von der Zoom-Richtung, wird dann berücksichtigt. So ist es von Vorteil, wenn z.B. beim Hineinzoomen in das Bild festgestellt wird, dass zwischen dem linken und dem rechten Teilbild ein Zoom-Mismatch vorliegt, das Bild, was noch nicht weit genug gezoomt wurde, weiter gezoomt wird. Die ursprüngliche Zoom-Richtung, welche zu der vorliegenden Endposition geführt hat, wird dann an dem nicht ausreichend gezoomten Bild fortgesetzt. Die Qualität des Verfahrens zum Korrigieren der Zoom-Einstellung und/oder des vertikalen Versatzes wird dadurch verbessert.

Ein vorteilhaftes Ausführungsbeispiel ist dadurch gekennzeichnet, dass die Korrekturwerte zu einem Graph rechnerisch verknüpft werden und Kontrollwerte in Bereichen des Graphen, in denen die Steigung / Krümmung größer als ein vordefinierter Grenzwert ist, keine Anwendung auf die Zoom- und/oder Pitch-Einstellung finden, d.h. sie werden lediglich als Kandidaten vermerkt aber noch nicht bei Bildung der Interpolierenden berücksichtigt. Zur Erläuterung sei angemerkt, dass nach jeder neuen Korrektur die Interpolierende testweise angepasst wird. Entstehen dabei Bereiche mit relativ zu einem vordefiniertem Wert zu großer Steigung / Krümmung, so erhält die neueste, d.h. die verursachende Korrektur, einen Kandidatenstatus und die neugebildete Interpolierende wird noch nicht übernommen. Korrekturen haben in Bezug auf ihre Nachbarn also eine zulässige Maximalsteigung bzw. Maximalkrümmung zu respektieren. Korrekturen, die die zulässige Maximalsteigung / Maximal-krümmung verletzen, werden am Motor verwirklicht und als Kandidat vermerkt, um auf eine entsprechende Wiederholung zu warten. Erst dann werden diese Korrekturen, die die zulässige Maximalsteigung / Maximalkrümmung verletzen, vollwertiger Bestandteil der Korrekturtabelle und ihrer Interpolierenden.

Ferner ist es von Vorteil, wenn der Graph zu einem vom Benutzer bestimmten Zeitpunkt als eine neue Kalibrierkurve definiert wird, deren Korrekturwerte ab diesem Zeitpunkt als Standardeinstellung bzgl. der Zoom- und/oder Pitch-Einstellung dienen. Somit ist eine neue Basiskalibrierkurve definiert, die sich aus den alten, noch nicht korrigierten Werten und neuen Werten zusammensetzt, wobei die neuen Werte die vorher in der Basistabelle enthaltenen Werte modifizieren, mittels der die durch sie festgelegten Korrekturwerte, die jeweiligen Zoom-Einstellungen und/oder die Pitch-Einstellungen verändert werden.

Es ist von Vorteil, wenn die interpolierten Korrekturwerte in Abhängigkeit von der Nähe zu den bereits aufgefundenen Korrekturwerten berechnet werden. So wird eine direkte Verknüpfung zwischen aufgefundenen Korrekturwerten und interpolierten Korrekturwerten erzwungen.

Die Erfindung betrifft auch eine Steuerung oder Regelung eines Kamerarigs mit zwei Kameras, die ausgebildet ist, um das erfindungsgemäße Verfahren durchzuführen sowie ein Verfahren zur rein digitalen Bildkorrektur.

Mit anderen Worten stellt es sich wie folgt dar:
Während die bei einer Kalibrierung erstellten Basistabellen einem Alterungs-prozess, etwa durch Temperatur, Gravitation, Spiel oder etc. unterliegen, wird durch die Erfindung hier eine Abhilfe geschaffen. Es werden Online-Korrekturfunktionen für Zoom und/oder mittleren vertikalen Versatz zur Verfügung gestellt, die wirksam werden, wenn der entsprechende Bildfehler ein festgelegtes Ausmaß überschreitet und nicht gerade gezoomt wird. Alle durchgeführten Korrekturen werden in Korrekturtabellen gesammelt, periodisch bestimmten Auswahlkriterien unterzogen und schließlich mit den bestehenden Basistabellen kombiniert, sodass diese nach wenigen Zoom-Einstellungen der veränderten Situation entsprechen, weil interpolierte Werte für unbesuchte Brennweiten zur Verfügung stehen. Die Entscheidung, die Basistabellen zu aktualisieren, trifft jedoch der Anwender. Für den mittleren vertikalen Versatz gibt es eine Korrekturtabelle, etwa mit symmetrischer Neigung. Für die Zoom-Einstellung gibt es jedoch zwei Korrekturtabellen, jeweils eine für den Vorwärts-Zoom und eine für den Rückwärts-Zoom.

Die durchgeführten Korrekturen sind entweder punktuell und flüchtig oder sie haben lokalen Einfluss auf die Korrekturtabelle:
Korrekturen mit ausreichendem Konfidenzwert haben lokalen Einfluss, d.h. sie passen die Korrekturtabelle in ihrer Umgebung stetig so an, dass bei erneutem Besuch derselben Stelle der korrigierte Motorwert bereits angenommen ist.

Korrekturen, an denen innerhalb der Interpolierenden eine vordefinierte Maximalsteigung / Maximalkrümmung übertroffen würde, und Korrekturen mit zu geringem Konfidenzwert sind bloß punktuell und flüchtig, d.h. sie werden am Motor realisiert und als Kandidat vermerkt ohne aber Einfluss auf die Korrekturtabelle zu nehmen, sogenanntes Auto-Clear, d.h. bei erneutem Besuch derselben Stelle muss wieder entsprechend korrigiert werden. Auto-Clear bedeutet somit, dass die eingebrachte Korrektur außerdem mit jeder nachfolgenden Zoom-Änderung nach und nach wieder abgebaut wird, d.h. es wird zu den Korrekturwerten der Basistabelle zurückgekehrt.

Zwischen zwei Korrekturen mit lokalem Einfluss wird interpoliert, wenn sie einen vordefinierten Maximalabstand auf der Abszisse der Korrekturtabelle, also die Brennweite, nicht überschreiten. Es wird jedoch möglichst nicht extrapoliert.

Eine aktuelle Korrektur mit geringem Abstand zu einer älteren ersetzt diese ältere:
Korrekturen können einander ersetzen, wenn sie einen Mindestabstand in Bezug zur Abszisse der Korrekturtabelle unterschreiten. Der Abstand, innerhalb dessen eine Ersetzung stattfindet, heißt Ersetzungskorridor und ist in seiner Breite abhängig vom Alter der zu ersetzenden Korrektur, d.h. je älter die Korrektur desto breiter der Korridor.

Eine aktuelle Korrektur mit lokalem Einfluss ersetzt eine ältere, sofern auch diese ältere lokalen Einfluss hatte. Ist die ältere vom punktuellen und flüchtigen Typ, also ein Kandidat, kommt es zu keiner Ersetzung. Die ältere existiert weiterhin als Kandidat.

Eine aktuelle Korrektur vom punktuellen und flüchtigen Typ ersetzt eine ältere, sofern auch diese ältere vom punktuellen und flüchtigen Typ ist. Hat die ältere lokalen Einfluss, kommt es zu keiner Ersetzung. Die jüngere Korrektur tritt als Kandidat neben die ältere.

Die Ersetzung einer Korrektur wird vermerkt. Wiederholte Ersetzungen ähnlichen Ausmaßes, also in Bezug zur Ordinate der Korrekturtabelle, werden gezählt. Jede erfasste Korrektur verfügt über einen solchen Zähler. Sein Wert heißt Wiederholungsgewicht.

Benachbarte Korrekturen ähnlichen Ausmaßes verstärken einander:
Wird eine Stelle auf der Abszisse, also eine Brennweite, besucht, die im Ersetzungskorridor einer älteren Korrektur mit lokalem Einfluss liegt und ist keine neuerliche Korrektur nötig, so steigt das Wiederholungsgewicht dieser älteren.

Kleine Korrekturen auf Grundlage einer interpolierten Position bestätigen die beiden benachbarten Korrekturen, die Anlass gegeben haben zu dieser Interpolation. Ihr Wiederholungsgewicht wird erhöht.

Kleine Korrekturen auf Grundlage einer interpolierten Position bestätigen die beiden benachbarten Korrekturen, die Anlass gegeben haben zu dieser Interpolation. Ihr Zeitstempel wird auf den der aktuellen Korrektur gesetzt.

Erst Kandidaten mit einer bestimmten Wiederholung nehmen Einfluss auf die Struktur der Korrekturtabelle. Je nach Wiederholung und Gewicht des Kandidaten, sowie Alter und Gewicht der bestehenden Nachbarn, werden bis zu drei Korrekturen so modifiziert, dass die Maximalsteigung / Maximalkrümmung schließlich respektiert wird:
Kandidaten, deren Wiederholungsgewicht einen vordefinierten Wert überschreitet, nehmen Einfluss auf die Korrekturtabelle, indem sie so weit abgeschwächt werden, dass die zulässige Maximalsteigung / Maximalkrümmung bei Interpolation nicht verletzt wird. Existiert ein Kandidat neben einer Korrektur mit lokalem Einfluss, geschieht dies erst, wenn das Wiederholungsgewicht des Kandidaten das der anderen Korrektur um einen vordefinierten Wert überschreitet. Es ist von Vorteil, wenn auch die beiden Nachbarn des Kandidaten nach Maßgabe ihres Alters und/oder ihres Konfidenzgewichts und/oder ihres Wiederholungsgewichts mit abgeschwächt werden, dem Kandidaten also ein Stück weit entgegenkommen, die Abschwächung also verteilt wird.

Die Korrekturtabelle in ihrer aktuellen Form kann periodisch einem Prozess unterzogen werden, der die Anzahl der Kontrollwerte auf eine vordefinierte Maximalanzahl begrenzt, und zwar derart, dass jüngere und/oder verlässlichere Korrekturen bevorzugt erhalten bleiben.

Vordefinierte Werte und/oder Entscheidungsmuster können einem Lernprozess unterliegen, z.B. indem parallel eine Vielzahl möglicher Interpolierender verwaltet wird, basierend auf unterschiedlichen Parametersätzen, und/oder Entscheidungsmustern und jede neu vorgenommene Korrektur zu einer Bewertung all dieser Interpolierenden führt. Im Laufe des Betriebs kann sich dann die am besten arbeitende Kombination aus Parametersatz und Regelsammlung herauskristallisieren.

Grundsätzlich sind die beschriebenen Mechanismen auf alle Korrekturen anwendbar, die sich durch eine eindimensionale Look-up-Tabelle darstellen lassen, beispielweise ein Höhenversatz.

## Patentansprüche

1. Verfahren zum Korrigieren der Zoom-Einstellung und/oder des vertikalen Versatzes in einem aus zwei Teilbildern zusammengesetzten Bild eines Stereofilms, wobei das eine Teilbild von einer ersten Kamera eines Kamerarigs zur Verfügung gestellt wird und das zweite Teilbild von einer zweiten Kamera des Kamerarigs zur Verfügung gestellt wird, wobei ein vertikaler Versatz über eine Veränderung der Pitch-Einstellung verändert wird, wobei während des Betriebs beim Aufnehmen des Stereofilms ein Unterschied zwischen den vorliegenden Zoom-Ergebnissen im ersten Teilbild relativ zum zweiten Teilbild erfasst wird und/oder ein vertikaler Versatz der im ersten Teilbild vorhandenen Bildpunkte zu diesen korrespondierenden Bildpunkten im zweiten Teilbild erfasst wird und basierend auf dieser Erkenntnis Korrekturwerte errechnet werden, mit denen der Zoom-Unterschied und/oder der vertikale Versatz, bei entsprechende Anwendung auf die Zoom- und/oder Pitch-Einstellung, vermindert wird und jedem Korrekturwert ein Zeitwert und ein Konfidenzwert zugewiesen wird.

2. Verfahren nach Anspruch 1, **dadurch gekennzeichnet, dass** die Ansteuerung des Kamerarigs entsprechend des Korrekturwerts, wie den Zoom-Unterschied und/oder den vertikalen Versatz zwischen den zwei Teilbildern beseitigt.

3. Verfahren nach Anspruch 1 oder 2, **dadurch gekennzeichnet, dass** zwischen zwei Korrekturwerten einer oder mehrere weitere Korrekturwerte mittels einer Interpolierung errechnet werden, vorzugsweise in Abhängigkeit ihres Zeitwertes und/oder Konfidenzwertes.

4. Verfahren nach einem der Ansprüche 1 bis 3, **dadurch gekennzeichnet, dass** die Korrekturwerte sofort zur Berichtigung der Zoom-Einstellung und/oder der Pitch-Einstellung einer Kamera des Kamerarigs eingesetzt werden oder zeitversetzt eingesetzt werden, etwa erst nach einer expliziten Freigabe durch einen Bediener.

5. Verfahren nach einem der Ansprüche 1 bis 4, **dadurch gekennzeichnet, dass** die Zoom-Korrekturwerte in Abhängigkeit von der Zoom-Richtung, die bei deren Ermittlung zugrunde liegt, in einer ersten oder zweiten Zoom-Korrekturwertetabelle abgespeichert werden.

6. Verfahren nach einem der Ansprüche 1 bis 5, **dadurch gekennzeichnet, dass** die Korrekturwerte zu einem Graph rechnerisch verknüpft werden und Kontrollwerte in Bereichen des Graphen, in denen die Steigung / Krümmung größer als ein zuvor definierter Grenzwert ist, zwar eine Anwendung bezüglich der Zoom- und/oder Pitch-Einstellung finden, aber eine Interpolierende einer die Korrekturwerte beinhaltenden Korrekturtabelle für spätere Durchläufe noch nicht angepasst wird.

7. Verfahren nach Anspruch 6, **dadurch gekennzeichnet, dass** der Graph als eine neue Kalibrierkurve definiert wird, deren Korrekturwerte ab diesem Zeitpunkt in Kombination mit den Werten einer Basistabelle als Standardeinstellung bzgl. der Zoom- und/oder Pitch-Einstellung dienen.

8. Verfahren nach einem der Ansprüche 3 bis 7, **dadurch gekennzeichnet, dass** die interpolierten Korrekturwerte in Abhängigkeit von der Nähe zu bereits aufgefundenen Korrekturwerten berechnet werden.

9. Steuerung oder Regelung eines Kamerarigs mit zwei Kameras, die ausgebildet ist, um das Verfahren nach einem der Ansprüche 1 bis 8 durchzuführen.

## Claims

1. Method for correcting the zoom setting and/or the vertical offset in an image assembled from two sub-frames of a stereo film, wherein the one sub-frame is provided by a first camera of a camera rig and the second sub-frame is provided by a second camera of the camera rig, wherein a vertical offset is changed via a change in the pitch setting, wherein during the operation when recording the stereo film a difference between the present zoom-results in the first sub-frame relative to the second sub-frame is measured and/or a vertical offset of the image points present in the first sub-frame in relation to those corresponding image points in the second sub-frame is measured and, on the basis of this information, correction values are calculated, with which the zoom difference and/or the vertical offset is reduced, given appropriate application to the zoom and/or pitch, and a time value and a confidence value is assigned to each correction value.

2. Method according to claim 1, **characterized in that** the control of the camera rig, corresponding to the correction value, eliminates such as the zoom difference and/or the vertical offset between the two sub-frames.

3. Method according to claim 1 or 2, **characterized in that** one or more further correction values are calculated between two correction values by means of an interpolation, preferably dependent on their time value and/or confidence value.

4. Method according to any one of claims 1 to 3, **characterized in that** the correction values are used immediately for the correction of the zoom setting and/or the pitch setting of a camera of the camera rig or used with a time delay, such as only after an explicit approval from an operator.

5. Method according to any one of claims 1 to 4, **characterized in that** the zoom correction values, in dependence on the zoom direction which is the basis of their determination, are stored in a first or second zoom correction value table.

6. Method according to any one of claims 1 to 5, **characterized in that** the correction values are computationally linked to a graph, and control values in regions of the graph in which the slope/curvature is larger than a predefined limit, are indeed applied to the zoom setting and/or pitch setting, but an interpolation of a correction table comprising correction values for later runs is not yet adjusted.

7. Method according to claim 6, **characterized in that** the graph is defined as a new calibration curve whose correction values serve from this point in time, in combination with the values of a basis table, as a default setting with respect to the zoom setting and / or pitch setting.

8. Method according to any one of claims 3 to 7, **characterized in that** the interpolated correction values are calculated in dependence on the proximity to previously found correction values.

9. Controlling means or regulating means for a camera rig having two cameras, which is configured to carry out the method according to any one of claims 1 to 8.

## Revendications

1. Procédé de correction du réglage de zoom et/ou du décalage vertical dans une image d'un film stéréoscopique composée de deux images partielles, où la première image partielle est délivrée par une première caméra d'une plateforme de caméras et la deuxième image partielle est délivrée par une deuxième caméra de la plateforme de caméras, où un décalage vertical est modifié par une modification du réglage de hauteur, où en fonctionnement lors de l'enregistrement du film stéréoscopique une différence est détectée entre les résultats de zoom présentés dans la première image partielle par rapport à la deuxième image partielle , et/ou un décalage vertical des points d'image présentés dans la première image partielle est détecté par rapport aux points d'image qui leur correspondent dans la deuxième image partielle, et des valeurs de correction sont calculées sur la base de cette information, au moyen desquelles est réduite la différence de zoom et/ou le décalage vertical, lors d'une application correspondante au réglage de zoom et/ou de réglage de hauteur, et une valeur temporelle et une valeur de confiance sont affectées à chaque valeur de correction.

2. Procédé selon la revendication 1, **caractérisé en ce que** la commande de la plateforme de caméras supprime la différence de zoom et/ou le décalage vertical entre les deux images partielles en fonction de la valeur de correction.

3. Procédé selon la revendication 1 ou 2, **caractérisé en ce qu'**entre deux valeurs de correction, une ou plusieurs autres valeurs de correction sont calculées au moyen d'une interpolation, préférentiellement en fonction de leur valeur temporelle et/ou de leur valeur de confiance.

4. Procédé selon l'une des revendications 1 à 3, **caractérisé en ce que** les valeurs de correction sont immédiatement appliquées pour la rectification du réglage de zoom et/ou du réglage de hauteur d'une caméra de la plateforme de caméras, ou sont appliquées après un délai, p. ex. seulement après validation explicite par un opérateur.

5. Procédé selon l'une des revendications 1 à 4, **caractérisé en ce que** les valeurs de correction de zoom sont mémorisées en fonction de la direction de zoom qui est à la base de leur détermination, dans un premier ou un deuxième tableau de valeurs de correction de zoom.

6. Procédé selon l'une des revendications 1 à 5, **caractérisé en ce que** les valeurs de correction sont associées par calcul dans un graphe et **en ce que** des valeurs de contrôle dans des zones du graphe où la pente /la courbure est supérieure à une valeur limite préalablement définie, trouvent effectivement une application relative au réglage de zoom et/ou de hauteur, mais une interpolation d'un tableau de correction contenant les valeurs de correction n'est pas ajustée pour des cycles ultérieurs.

7. Procédé selon la revendication 6, **caractérisé en ce que** le graphe est défini comme une nouvelle courbe d'étalonnage dont les valeurs de correction servent dès lors de réglage standard pour le réglage de zoom et/ou de pas, en combinaison avec les valeurs d'un tableau de base.

8. Procédé selon l'une des revendications 3 à 7, **caractérisé en ce que** les valeurs de correction interpolantes sont calculées en fonction de la proximité à des valeurs de correction déjà trouvées.

9. Dispositif de commande ou réglage d'une plateforme de caméras pourvu de deux caméras, prévu(e) pour exécuter le procédé selon l'une des revendications 1 à 8.
